# EUROPÄISCHE PATENTSCHRIFT

(11) **EP 0 600 281 B1**
(45) Veröffentlichungstag und Bekanntmachung des Hinweises auf die Patenterteilung: **18.09.1996**
(21) Anmeldenummer: 93118344.6
(22) Anmeldetag: 12.11.1993
(51) Int. Cl.: F16K 5/06

(54) **Kugelhahn**
Ball valve
Robinet à tournant sphérique

(30) Priorität: 04.12.1992 DE 9216543 U
(43) Veröffentlichungstag der Anmeldung: 08.06.1994
(73) Patentinhaber: CERPRAECIS ANWENDUNGEN FÜR INGENIEURKERAMIK GmbH, D-45886 Gelsenkirchen (DE)
(72) Erfinder: Berchem, Rütger, Dr. Dipl.-Ing., D-45133 Essen (DE)
(74) Vertreter: Andrejewski, Walter, Dr.

(56) Entgegenhaltungen:
- FR-A- 1 552 104
- GB-A- 1 142 441

## Beschreibung

Die Erfindung betrifft ein Absperrorgan in Form eines Kugelhahns für ein flüssiges oder gasförmiges fluides Medium, und zwar insbesondere für ein Medium, welches feinteilige Feststoffe mitführt, - mit Gehäuse, Gehäuseströmungskanal mit Einströmabschnitt und Abströmabschnitt, Absperrkugel, Absperrkugelströmungskanal und Stelltrieb für die Absperrkugel, wobei die Absperrkugel in Sitzringen gelagert ist und der Gehäuseströmungskanal sowie der Absperrkugelströmungskanal in Durchströmstellung koaxial verlaufen und kreisförmige Querschnitte aufweisen. - Der Ausdruck gasförmiges fluides Medium umfaßt auch dampfförmige.

Bei den aus der FR-A-1 552 104 bekannten Absperrorganen des beschriebenen Aufbaus kann nicht ausgeschlossen werden, daß zwischen dem Einströmabschnitt und/oder dem Abströmabschnitt des Gehäuseströmungskanals einerseits, dem Absperrkugelströmungskanal andererseits in Folge von Fertigungstoleranzen und Montagetoleranzen ein Versatz entsteht. Das bedeutet, daß im Strömungsweg des fluiden Mediums bauteilversatzbedingte Kanten freikommen, die angeströmt werden. Daraus resultieren in strömungsmäßiger Hinsicht störende Druckverluste, insbesondere aber werden strömungsbedingte Verschleißerscheinungen ausgelöst, die die Standzeit des Absperrorgans insgesamt und die Verfügbarkeit der Anlage, in die das Absperrorgan eingebaut ist, beeinträchtigen. Nehmen die Kanten auch an der Abdichtung teil, so kann nicht ausgeschlossen werden, daß auch die Dichtungsfunktion beeinträchtigt wird. Die beschriebenen bauteilversatzbedingten Mängel stören insbesondere dort, wo die Absperrorgane auch als Feststoffschleusen, z. B. im Rahmen einer Gasstromförderung von Flugasche, eingesetzt werden.

Der Erfindung liegt die Aufgabe zugrunde, ein Absperrorgan des eingangs beschriebenen Aufbaus so weiter auszubilden, daß die beschriebenen, bauteilversatzbedingten Störungen nicht mehr auftreten.

Zur Lösung dieser Aufgabe lehrt die Erfindung bei einem Absperrorgan des eingangs beschriebenen Aufbaus die Kombination der folgenden Merkmale:
a) Der Einströmungsabschnitt des Gehäuseströmungskanals mündet in den Absperrkugelströmungskanal mit einem kleineren Querschnitt ein als der Absperrkugelströmungskanal beginnt,
b) der Absperrkugelströmungskanal mündet in den Abströmabschnitt des Gehäuseströmungskanals mit einem kleineren Querschnitt ein als der Abströmabschnitt des Gehäuseströmungskanals beginnt,
c) die Absperrkugel ist unter der Einwirkung einer Federkraft gegen die Sitzringe gepreßt,
wobei die Querschnittsunterschiede zwischen Einströmabschnitt und Absperrkugelströmungskanal sowie Absperrkugelströmungskanal und Abströmabschnitt größer sind als ein auf Fertigungstoleranzen und Montagetoleranzen beruhender Versatz zwischen den genannten Bauteilen. Bei dem erfindungsgemäßen Absperrorgan kann die Absperrkugel mit einer Zapfenlagerung ausgerüstet sein. Sie kann aber auch schwimmend gelagert sein. Im Rahmen der Erfindung umfassen die Ausdrücke Einströmabschnitt sowie Abströmabschnitt auch die Bohrungen der Sitzringe. Nach bevorzugter Ausführungsform der Erfindung ist der Querschnitt des Einströmabschnittes des Gehäuseströmungskanls zu seiner Mündung hin hohlkonusförmig verjüngt. Unter Berücksichtigung der Lehre des Anspruches 1 können grundsätzlich auch der Abströmabschnitt des Gehäuseströmungskanals und der Absperrkugelströmungskanal hohlkonisch ausgeführt sein. Vorzugsweise ist jedoch der Absperrkugelströmungskanal zylindrisch gestaltet.

Das erfindungsgemäße Absperrorgan kann unter Berücksichtigung der aufzunehmenden Beanspruchungen aus den verschiedensten Werkstoffen gestaltet sein. Es empfiehlt sich, den Gehäuseströmungskanal in Bauteilen aus Ingenieurkeramik auszubilden. Auch die Sitzringe, die Absperrkugeln sowie andere mit dem Mediumstrom in Verbindung kommende Bauteile bestehen zweckmäßigerweise aus Ingenieurkeramik. Die Kanten, die durch die Querschnittsunterschiede bei dem erfindungsgemäßen Absperrorgan gebildet sind, sind zweckmäßigerweise verrundet.

Im Ergebnis wird die der Erfindung zugrundeliegende an sich komplexe Aufgabe mit sehr einfachen Mitteln, die fertigungstechnisch einfach verwirklicht werden können, gelöst.

Im folgenden wird die Erfindung anhand einer lediglich ein Ausführungsbeispiel darstellenden Zeichnung ausführlicher erläutert. Es zeigen in schematischer Darstellung
- Fig. 1: einen Querschnitt durch ein erfindungsgemäßes Absperrorgan in Durchströmungsrichtung,
- Fig. 2: in gegenüber der Fig. 1 wesentlich vergrößertem Maßstab den Ausschnitt A aus dem Gegenstand der Fig. 1 und
- Fig. 3: entsprechend der Fig. 2 den Ausschnitt B aus dem Gegenstand der Fig. 1.

Das in den Figuren dargestellte Absperrorgan 1 ist ein Kugelhahn. Das Absperrorgan 1 ist für flüssige oder gasförmige fluide Medien bestimmt. Gasförmige Medien bezeichnet im Rahmen der Erfindung auch dampfförmige. Insbesondere ist das Absperrorgan bestimmt für ein fluides Medium, welches feinteilige Feststoffe, z. B. Flugasche, mitführt.

Zum grundsätzlichen Aufbau des Absperrorgans gehören ein Gehäuse 2, ein Gehäuseströmungskanal mit Einströmabschnitt 3 und Abströmabschnitt 4, eine Absperrkugel 5, ein Absperrkugelströmungskanal 6 und ein Stelltrieb 7 für die Absperrkugel 5. Die Anordnung ist so getroffen, daß die Absperrkugel 5 in Sitzringen 8, 9 gelagert ist und der Gehäuseströmungskanal 3, 4 sowie der Absperrkugelströmungskanal 6 in Durchströmungsstellung koaxial verlaufen. Darunter wird verstanden, daß der koaxiale Verlauf im Rahmen der üblichen Toleranzen gegeben ist. Im übrigen besitzen der Gehäuseströmungskanal 3, 4 sowie der Absperrkugelströmungskanal 6 einen kreisförmigen Querschnitt.

Der Einströmabschnitt 3 des Gegäuseströmungskanals mündet in den Absperrkugelströmungskanal 6 mit einem kleineren Querschnitt ein als der Absperrkugelströmungskanal 6 beginnt. Andererseits mündet der Absperrkugelströmungskanal 6 in den Abströmabschnitt 4 des Gehäuseströmungskanals mit einem kleineren Querschnitt ein als der Abströmabschnitt 4 des Gehäuseströmungskanals beginnt. Die Absperrkugel 5 ist unter der Einwirkung einer Federkraft gegen die Sitzringe 8, 9 gepreßt. Das kann auf verschiedene Weise verwirklicht werden und geschieht im Rahmen der Erfindung über eine besondere Federanordnung 10. Die Querschnittsunterschiede dR zwischen Einströmabschnitt 3 und Absperrkugelströmungskanal 6 sowie Absperrkugelströmungskanal 6 und Abströmabschnitt 4 sind, bezogen auf die Radien R, größer als ein auf Fertigungstoleranzen und/oder Montagetoleranzen beruhender Versatz zwischen den genannten Bauteilen. Im Rahmen der Erfindung umfassen die Ausdrücke Einströmabschnitt 3 und Abströmabschnitt 4 auch die Bohrungen der Sitzringe 8, 9.

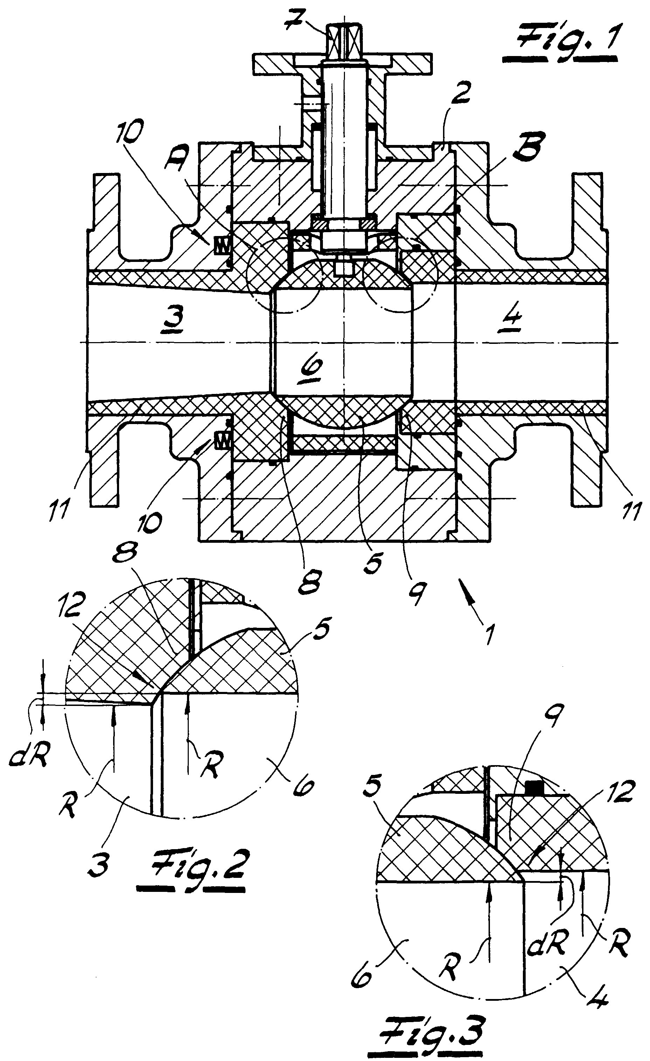

In der Fig. 1 erkennt man, daß der Querschnitt des Einströmabschnittes 3 des Gehäuseströmungskanals zu seiner Mündung hin hohlkonusförmig verjüngt ist. Der Absperrkugelströmungskanal 6 ist demgegenüber zylindrisch ausgeführt. Man entnimmt aus der Fig. 1, daß der Gehäuseströmungskanal 3, 4 in Bauteilen 11 aus Ingenieurkeramik ausgebildet ist. Außerdem bestehen die Sitzringe 8, 9 und die Absperrkugel 5 aus Ingenieurkeramik. Das gilt auch für andere mit dem strömenden Medium in Verbindung kommende Bauteile. Nicht gezeichnet wurde, daß die Kanten 12, die durch die Querschnittsunterschiede dR gebildet sind, verrundet sind.

Die Lehre der Erfindung kann bei Absperrorganen der unterschiedlichsten Nennweiten verwirklicht werden.

## Patentansprüche

1. Absperrorgan (1) in Form eines Kugelhahns für ein flüssiges oder gasförmiges fluides Medium, insbesondere für solche, die feinteilige Feststoffe mitführen, - mit
Gehäuse (2),
Gehäuseströmungskanal mit Einströmabschnitt (3) und Abströmabschnitt (4),
Absperrkugel (5),
Absperrkugelströmungskanal (6) und
Stelltrieb (7) für die Absperrkugel (5),
wobei die Absperrkugel (5) in Sitzringen (8, 9) gelagert ist und der Gehäuseströmungskanal (3, 4) sowie der Absperrkugelströmungskanal (6) in Durchströmstellung koaxial verlaufen und kreisförmige Querschnitte aufweisen und wobei die Kombination der folgenden Merkmale verwirklicht ist:
a) Der Einströmungsabschnitt (3) des Gehäuseströmungskanals mündet in den Absperrkugelströmungskanal (6) mit einem kleineren Querschnitt ein als der Absperrkugelströmungskanal (6) beginnt,
b) der Absperrkugelströmungskanal (6) mündet in den Abströmabschnitt (4) des Gehäuseströmungskanals mit einem kleineren Querschnitt ein als der Abströmabschnitt (4) des Gehäuseströmungskanals beginnt,
c) die Absperrkugel (5) ist unter der Einwirkung einer Federkraft gegen die Sitzringe (8, 9) gepreßt,
wobei die Querschnittsunterschiede (dR) zwischen Einströmabschnitt (3) und Absperrkugelströmungskanal (6) sowie Absperrkugelströmungskanal (6) und Abströmabschnitt (4) größer sind als ein auf Fertigungstoleranzen und Montagetoleranzen beruhender Versatz zwischen den genannten Bauteilen.

2. Absperrorgan nach Anspruch 1, wobei der Querschnitt des Einströmabschnittes (3) des Gehäuseströmungskanals zu seiner Mündung hin hohlkonusförmig verjüngt ist.

3. Absperrorgan nach einem der Ansprüche 1 oder 2, wobei der Absperrkugelströmungskanal (6) zylindrisch ausgeführt ist.

4. Absperrorgan nach einem der Ansprüche 1 bis 3, wobei der Gehäuseströmungskanal (3, 4) in Bauteilen aus Ingenieurkeramik ausgebildet ist und/oder die Sitzringe (8, 9) und die Absperrkugel (5) sowie andere mit dem Medienstrom in Verbindung kommende Bauteile aus Ingenieurkeramik bestehen.

5. Absperrorgan nach einem der Ansprüche 1 bis 4, wobei die Kanten (12), die durch die Querschnittsunterschiede (dR) gebildet sind, verrundet sind.

## Claims

1. A shut-off element (1) in form of a ball valve for liquid or gaseous fluid media and in particular for media carrying fine-particled solid matter, comprising
a housing (2),
a housing flow channel including an inlet section (3) and an outlet section (4),
a shut-off ball (5),
a shut-off ball flow channel (6) and
a regulating mechanism (7) for the shut-off ball (5),
in which the shut-off ball (5) is arranged on seat collars (8, 9) and the housing flow channel (3, 4) and the shut-off ball flow channel (6) are coaxially arranged in flow position and contain circular cross sections and in which a combination of the following characteristics applies:
a) the inlet section (3) of the housing flow channel connects to the shut-off ball flow channel(6) with a smaller cross section than that of the start of the shut-off ball flow channel(6),
b) the shut-off ball flow channel (6) connects to the outlet section (4) with a smaller cross section than that of the start of the outlet section (4) of the housing flow channel,
c) the shut-off ball (5) is resiliently pressed against the seat collars (8, 9),
in which the differences in cross section (dR) between the inlet section (3) and the shut-off ball flow channel (6) and between the shut-off ball flow channel (6) and the outlet section (4) is larger than an offset created between the said components by manufacturing and installation tolerances.

2. A shut-off element according to claim 1, in which the cross section of the inlet section (3) of the housing flow channel is tapered in a hollow cone shape towards its outlet.

3. A shut-off element according to one of the claims 1 or 2, in which the shut-off ball flow channel (6) has a cylindrical shape.

4. A shut-off element according to one of the claims 1 to 3, in which the housing flow channel (3, 4) is designed from engineered ceramic components and/or the seat collars (8, 9) and the shut-off ball (5) as well as other components coming into contact with the media flow are made of engineered ceramics.

5. A ahut-off element according to one of the claims 1 to 4, in which the edges (12) formed by the different in cross section (dR) are rounded.

## Revendications

1. Organe d'arrêt (1) sous la forme d'un robinet à boisseau sphérique pour un produit fluide liquide ou gazeux, en particulier pour ceux qui entraînent des matières solides fines, - avec
corps (2),
canal d'écoulement du corps avec segment d'admission (3) et segment de sortie (4),
boule d'arrêt (5),
canal d'écoulement de la boule d'arrêt (6) et
organe de commande (7) de la boule d'arrêt (5),
la boule d'arrêt (5) étant montée dans des bagues de siège (8, 9) et le canal d'écoulement du corps (3, 4) et le canal d'écoulement de la boule d'arrêt (8) étant coaxiaux en position ouverte et présentant des sections circulaires, la combinaison des caractéristiques suivantes étant réalisée :
a) Le segment d'admission (3) du canal d'écoulement du corps débouche dans le canal d'écoulement de la boule d'arrêt (6) avec une section plus petite que celle par laquelle commence le canal d'écoulement de la boule d'arrêt (6),
b) le canal d'écoulement de la boule d'arrêt (6) débouche dans le segment de sortie (4) du canal d'écoulement du corps avec une section plus petite que celle par laquelle commence le segment de sortie (4) du canal d'écoulement du corps,
c) la boule d'arrêt (5) est appuyée par effet de ressort contre les bagues de siège (8,9),
les différences de section (dR) entre le segment d'admission (3) et le canal d'écoulement de la boule d'arrêt (6) d'une part et le canal d'écoulement de la boule d'arrêt (6) et le segment de sortie (4) d'autre part sont plus grandes qu'un déplacement entre les composants cités dû aux tolérances de fabrication et aux tolérances de montage.

2. Organe d'arrêt selon la spécification 1, la section du segment d'admission (3) du canal d'écoulement du corps se rétrécissant en forme de cône creux vers son embouchure.

3. Organe d'arrêt selon une des spécifications 1 ou 2, le canal d'écoulement de la boule d'arrêt (6) étant réalisé de façon cylindrique.

4. Organe d'arrêt selon une des spécifications 1 à 3, le canal d'écoulement du corps (3, 4) étant réalisé en composants en céramique technique et/ou les bagues de siège (8, 9) et la boule d'arrêt (5) ainsi que d'autres composants entrant en contact avec le flux de produit étant en céramique technique.

5. Organe d'arrêt selon une des spécifications 1 à 4, les arêtes (12) formées par les différences de section (dR) étant arrondies.
